# EUROPEAN PATENT APPLICATION

(11) **EP 3 412 636 A1**
(43) Date of publication of application: **12.12.2018**
(21) Application number: 17020246.9
(22) Date of filing: 08.06.2017
(51) Int. Cl.: C02F 1/24, B03D 1/14, B03D 1/24, B01F 5/04, C02F 1/52, C02F 11/04

(54) **AN IMPROVEMENT OF THE CHEMICAL-PHYSICAL FLOTATION PROCESS**

(71) Applicant: De Bella, Paolo, 20088 Peschiera Borromeo (MI) (IT)
(72) Inventor: De Bella, Paolo, 20088 Peschiera Borromeo (MI) (IT)
(74) Representative: Falcucci, Vincenzo

(57) **Abstract**

The present invention consists of an improvement of the chemical-physical process of the flotation systems, characterized in that the sewage is aspired from a sump with a constant level by means of an aspiration pump onto which a Venturi aspirator is placed, characterized in that along said aspiration pump a coagulant reagent and a flocculating reagent are injected and that the injection points of said reactives are downstream of said Venturi aspirator. The mixture obtained by means of the injection of reagents is pushed through the three mixers placed in line, before being introduced into the flotation basin where a blade scraper separates the muddy part from the liquid parts.

## Description

The flotation systems commonly used in the wastewater treatment plants are based on a mass of micro air bubbles, rising from the bottom of the flotation basin towards the surface and which, during their upward path, catch the mod flakes coming from the flocculation phase, adhering to the outside of the flake itself. When the mud mass rises to the surface, the micro-bubbles tend to break thus determining the sedimentation of a part of the mud. For obtaining the micro-bubble mass it is necessary to pressurize a part of the sewage with high pressure air that determines a consequentenergy consumption. In Italian patent no. 1123641 of 30th April 1986 e flotation pre-treatment is described - before the final oxidation - in the purification of civil and industrial wastewater. The flotation system according to the present invention is based on a completely different principle, as described hereinbelow:
- the wastewater to be treated is taken, by means of a pump,from a sump with a constant level and led to the flotation basin;
- along the pump's delivery pipe a Venturi aspirator is placed and, with the same pressure of the water to be treated, aspires a quantity of controlled air in the form of tiny bubbles that is going to be mixed to the sewage;
- in the same pipeline a reactive is injected for the coagulation of the floating substances and of the fats (ferric chloride, aluminium polychloride, aluminium sulphate). The mud clots that are formed incorporate one or more air bubbles, thus preventing their rupture when they rise to the surface;
- once this operation is completed, in the same pipeline a flocculating reagent (polyelectrolyte) is injected, which has the task to further enlarge the mud clots and to make them larger maintaining the same weight, and thus lighter with respect to the water shifted.
- The mixture obtained by adding air and the described reagents passes through three special mixer reactors placed in line before being introduced into the flotation basin.
- When the sewage thus treated gets into the flotation basin, the instantaneous separation of the fat muddy part from the liquid part occurs;
- the mud and the fat, which in the meantime have reached the surface, are removed by a multiple blade scraper, while the purified water reaches the discharge or the following treatment phase. The mud removed by the plant, with a high content of dry matter, may be directly sent to the anaerobic digester for the production of biogas;
- the biogas produced from the mud coming from this kind of flotation, being extremely thickened, may contain up to 75% of pure methane with low content of hydrogen sulphide.

The advantages of above described process may be summarized as follows:
- abatement of organic carbon from 60% to 80%;
- abatement of suspended substance and of the fats over 90%;
- resulting mud fin dry matter up to 15% (before it was 7-8%);
- minimum encumbrance and low exercise cost and total automatization.

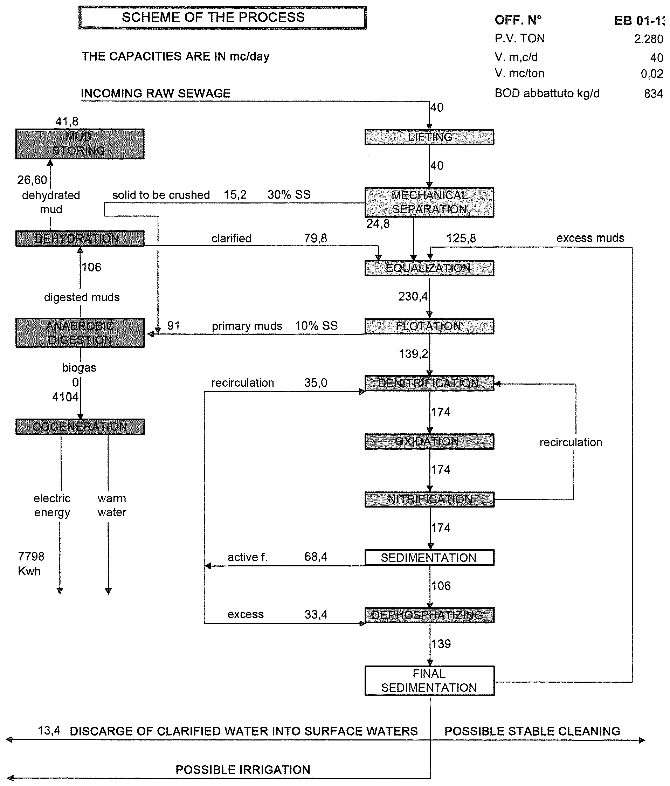

## Claims

1. A flotation system with a chemical-physical pre-treatment, comprising:
- a sump with a constant level;
- an aspiration pump;
- a Venturiaspiratori;
- three reagent mixer cylinders, placed in line;
- a flotation basin;
- a multiple blade scraper;
- a discharge;
- an anaerobic digester for the production of biogas.

2. A flotation system according to claim 1, **characterized in that** along said aspiration pump a Venturi aspirator is placed.

3. A flotation system according to claim 1, **characterized in that** the sewage is aspired from said sump at constant level by said aspiration pump, along which a reactive is injected for the coagulation of the suspended substances and of the fats.

4. A flotation system according to claim 1, **characterized in that** along said aspiration pump a flocculating reagent is injected.

5. A system according to the precedent claims, **characterized in that** the points for the injection of the reactive are always downstream of said Venturi aspirator.

6. A flotation system according to the precedent claims, **characterized in that** the mixture obtained by the sewage and the reagents injected is pushed by the pump through said three mixer reactors before being introduced into said flotation basin.

7. A flotation system according to the precedent claims, **characterized in that** in said flotation basin a multiple blade scraper removes the fat and muddy part that has moved to the surface.

8. A flotation system according to the precedent claims, **characterized in that** in said flotation basin the fat and muddy part removed is sent to said anaerobic digester for the biogas production.

9. A flotation system according to the precedent claims, **characterized in that** the water purified in said flotation basin is sent to the discharge or to the next treatment phase.
